# EUROPÄISCHE PATENTSCHRIFT

(11) **EP 4 416 020 B1**
(45) Veröffentlichungstag und Bekanntmachung des Hinweises auf die Patenterteilung: **15.04.2026**
(21) Anmeldenummer: 22801761.2
(22) Anmeldetag: 10.10.2022
(51) Int. Cl.: B60T 1/10, B60T 8/1761, B60W 30/18

(54) **VERFAHREN ZUM BETREIBEN EINES BREMSREGELUNGSSYSTEMS, BREMSREGELUNGSSYSTEM, COMPUTERPROGRAMM UND COMPUTERLESBARES SPEICHERMEDIUM**
METHOD FOR OPERATING A BRAKE CONTROL SYSTEM, BRAKE CONTROL SYSTEM, COMPUTER PROGRAM, AND COMPUTER-READABLE STORAGE MEDIUM
PROCÉDÉ POUR FAIRE FONCTIONNER UN SYSTÈME DE RÉGULATION DU FREINAGE, SYSTÈME DE RÉGULATION DU FREINAGE, PROGRAMME INFORMATIQUE ET SUPPORT D'ENREGISTREMENT LISIBLE PAR ORDINATEUR

(30) Priorität: 15.10.2021 DE 102021126804
(43) Veröffentlichungstag der Anmeldung: 21.08.2024
(73) Patentinhaber: Bayerische Motoren Werke Aktiengesellschaft, 80809 München (DE); AUMOVIO Engineering Solutions GmbH, 60489 Frankfurt am Main (DE)
(72) Erfinder: VERSTOV, Vladimir, 81541 München (DE); RAHN, Jürgen, 60488 Frankfurt am Main (DE)
(74) Vertreter: Epping - Hermann - Fischer
(86) Internationale Anmeldenummer: PCT/EP2022/078121
(87) Internationale Veröffentlichungsnummer: WO 2023/061948

(56) Entgegenhaltungen:
- EP-A1- 3 135 551
- DE-A1- 102013 221 979
- JP-A- 2017 017 930
- US-A1- 2018 093 571
- US-A1- 2019 193 568
- US-A1- 2021 229 646

## Beschreibung

Die Erfindung betrifft ein Verfahren zum Betreiben eines Bremsregelungssystems für ein Fahrzeug, ein korrespondierendes Bremsregelungssystem, Computerprogramm und computerlesbares Speichermedium.

Bei Kraftfahrzeugen mit einer zur Rekuperation verwendbaren elektrischen Maschine, insbesondere bei Fahrzeugen mit einem Elektroantrieb, kann kinetische Energie des Kraftfahrzeugs bei generatorischem Betrieb einer elektrischen Maschine in elektrische Energie gewandelt werden und in einen elektrischen Energiespeicher (typischerweise eine Batterie oder einen Kondensator) gespeist werden. Diese Wandlung der kinetischen Energie des Kraftfahrzeugs in elektrische Energie wird auch als (elektrische) Rekuperation bezeichnet.

Zur Rekuperation wird typischerweise an der elektrischen Maschine ein Rekuperationsmoment eingestellt, welches der Bewegung des Kraftfahrzeugs entgegen wirkt und dieses verzögert.

Die Rekuperation mittels des elektrischen Antriebs kann beispielsweise bei Betätigung des Bremspedals zur Verzögerung des Kraftfahrzeugs genutzt werden. Bei der sogenannten Bremsrekuperation wird ein Rekuperationsmoment oder eine Rekuperationsleistung bei einer Fahrzeugbremsbetätigung eingestellt, bei Betätigung eines Bremspedals beispielsweise abhängig von einem Bremspedalweg, mit welchem das Bremspedal des Fahrzeugs von einem Fahrer niedergedrückt wird.

Ferner kann die Rekuperation auch im Schubbetrieb zur Verzögerung des Fahrzeugs genutzt werden. Hierbei wird bei Beenden einer Fahrzeugfahrbetätigung, etwa bei Beenden der Betätigung des Fahrpedals, oder bereits davor ein Schubrekuperationsmoment (auch als Schlepprekuperationsmoment bezeichnet) des Fahrzeugs eingestellt, wodurch das Kraftfahrzeug verzögert wird.

Es kann vorgesehen sein, dass nicht erst bei völliger Beendigung der Fahrzeugfahrbetätigung, sondern bereits bei Rücknahme der Fahrzeugfahrbetätigung, beispielsweise bei noch geringer Betätigung des Fahrpedals, ein Schubrekuperationsmoment eingestellt wird; dabei nimmt der Betrag des Schubrekuperationsmoments im Allgemeinen mit abnehmender Fahrzeugfahrbetätigung zu und erreicht bei Beendigung der Fahrzeugfahrbetätigung seinen Maximalwert. Durch Rücknahme der Fahrzeugfahrbetätigung kann das Fahrzeug dosiert verzögert werden. Die Rekuperation im Schubbetrieb wird auch als Schubrekuperation bezeichnet. Bei der Schubrekuperation wird also ein vorbestimmtes Rekuperationsmoment oder eine vorbestimmte Rekuperationsleistung zum Beispiel dann eingestellt, wenn der Fahrer das Fahrpedal des Fahrzeugs nicht mehr (oder nur noch geringfügig) betätigt.

Alternativ oder zusätzlich kann vorgesehen sein, dass die Bremswirkung bei Fahrzeugbremsbetätigung zum Teil (bei gleichzeitiger Rekuperation) oder vollständig (ohne Rekuperation; sog. "Teilbremsung") durch ein mechanisches bzw. hydraulisches Bremssystem (z. **B.** ein hydraulisches Scheibenbremssystem) erzeugt wird, bei dem kinetische Energie des Fahrzeugs in Wärmeenergie (beispielsweise in den Bremsscheiben) umgewandelt wird. Derartige Bremssysteme weisen heutzutage zumeist eine Antiblockierregelung ("Antiblockiersystem", ABS, bzw. "Automatischer Blockierverhinderer", ABV, bzw. "Antiblockvorrichtung") auf, die jeweils einem oder mehreren Rädern des Fahrzeugs einzeln oder beispielsweise achsweise gemeinsam zugeordnet ist. Bei erkanntem Blockieren des entsprechenden Rads bzw. der entsprechenden Räder wird eine durch das entsprechende Bremssystem hervorgerufene Bremskraft reduziert, beispielsweise durch Minderung des Bremsdrucks. Üblicherweise wird die Rekuperation bei Aktivierung der Antiblockierregelung zu Gunsten der Regelbarkeit gänzlich eingestellt. Unter eine aktiven bzw. aktivierten Antiblockierregelung wird hier und im Folgenden ein aktives Regeln verstanden, nicht zu verwechseln mit der bloßen Aktivierung der Überwachung, ob ein Blockieren auftritt.

US 2021/229646 A1 betrifft ein Verfahren zum Steuern des Bremsens eines Fahrzeugs mit einer ersten unabhängigen Antriebseinheit, die dafür ausgelegt ist, Vorderräder anzutreiben, einer zweiten unabhängigen Antriebseinheit, die dafür ausgelegt ist, Hinterräder anzutreiben, und einer Trennvorrichtung, die in einer Antriebswelle installiert ist und eine Verbindung für die Antriebskraftübertragung herstellt und löst, wobei das Verfahren umfasst:
Bestimmen eines aktuellen Fahrzeugstabilitätsindex durch ein Steuergerät auf der Grundlage von innerhalb des Fahrzeugs gesammelten Informationen;
Verbinden oder Trennen der Trennvorrichtung durch die Steuereinheit basierend auf dem bestimmten Fahrzeugstabilitätsindex; und
Durchführen einer regenerativen Bremsung für alle Vorder- und Hinterräder des Fahrzeugs oder entweder für die Vorderräder oder die Hinterräder auf der Grundlage eines gesteuerten Zustands desr Trennvorrichtung durch die Steuerung.

Die Aufgabe, die der Erfindung zugrunde liegt, ist es, ein Verfahren zum Betreiben eines Bremsregelungssystem für ein Fahrzeug sowie ein korrespondierendes Bremsregelungssystem, Computerprogram und computerlesbares Speichermedium anzugeben.

Die Aufgabe wird gelöst durch den Gegenstand der unabhängigen Patentansprüche. Vorteilhafte Ausgestaltungen sind in den Unteransprüchen gekennzeichnet.

Gemäß eines ersten Aspekts betrifft die Erfindung ein Verfahren zum Betreiben eines Bremsregelungssystems für ein Fahrzeug.

Das Fahrzeug weist eine erste Achse und eine in Fahrtrichtung des Fahrzeugs darauffolgende zweite Achse auf. Die erste und zweite Achse können auch als Vorder- und Hinterachse oder umgekehrt bezeichnet werden. Jeder Achse ist wenigstens ein Rad des Fahrzeugs zugeordnet. Beispielsweise können jeder Achse des Fahrzeugs genau ein Rad, genau zwei oder auch mehr als zwei Räder zugeordnet sein.

Der ersten Achse ist eine Rekuperationsbremse zur Verzögerung des Fahrzeugs unter Rückspeisung von Energie in einen Energiespeicher des Fahrzeugs zugeordnet. Der zweiten Achse ist ebenfalls eine Rekuperationsbremse zur Verzögerung des Fahrzeugs unter Rückspeisung von Energie in einen Energiespeicher des Fahrzeugs zugeordnet. Bei einer Rekuperationsbremse handelt es sich insbesondere um eine elektrische Maschine, beispielsweise einen Antrieb des Fahrzeugs. Insbesondere handelt es sich bei dem Fahrzeug um ein bzw. einen als Elektro- oder Hybridfahrzeug ausgebildetes/n Personenkraftwagen (PKW), Lastkraftwagen (LWK), Motorrad oder Motorroller. Eine Rekuperationsbremse kann beispielsweise je Rad oder je Achse des Fahrzeugs vorgesehen sein. Ebenfalls denkbar ist, dass das Fahrzeug genau eine elektrische Antriebsmaschine aufweist, die derart mit der ersten und zweiten Achse steuerbar gekoppelt werden kann, dass der ersten und zweiten Achse jeweils eine Rekuperationsbremse zur Verzögerung des Fahrzeugs zuordenbar **ist.**

Darüber hinaus ist der ersten Achse eine Bremse mit Antiblockierregelung zugeordnet. Insbesondere handelt es sich bei der Bremse um eine mechanische **bzw.** hydraulische Bremse. Eine Bremse ist insbesondere je Rad des Fahrzeugs vorgesehen.

Bei dem Verfahren wird in einem Schritt a) dem Bremsregelungssytem ein Schubsignal bereitgestellt, das repräsentativ ist für einen Schubbetrieb des Fahrzeugs.

Wie eingangs erläutert kann hierzu beispielsweise eine Verminderung **bzw.** ein (angehendes) Beenden einer Fahrzeugfahrbetätigung ermittelt werden, etwa eine Verminderung **bzw.** ein (angehendes) Beenden der Betätigung des Fahrpedals oder eine korrespondierend vorgenommene oder automatische Einstellung einer Geschwindigkeitsregelanlage des Fahrzeugs erfasst werden, die **bzw.** das repräsentativ ist für ein durch die (entsprechende) Rekuperationsbremse einzustellendes Rekuperationsmoment.

In einem Schritt b) werden abhängig von dem Schubsignal die der ersten und zweiten Achse zugeordneten Rekuperationsbremsen aktiviert. In anderen Worten werden die erste und zweite Achse unter Rückspeisung von Energie in einen Energiespeicher des Fahrzeugs gebremst.

In einem Schritt c) wird dem Bremsregelungssystem ein Bremssignal bereitgestellt, das repräsentativ ist für eine Fahrzeugbremsbetätigung.

Wie eingangs erläutert kann hierzu beispielsweise eine Betätigung des Bremspedals **bzw.** ein Bremspedalweg oder eine korrespondierend vorgenommene oder automatische Einstellung einer Geschwindigkeitsregelanlage des Fahrzeugs erfasst werden, der bzw. die repräsentativ ist für eine/n durch die (entsprechende) Bremse hervorzurufende/n Bremskraft bzw. Bremsdruck.

In einem Schritt d) wird abhängig von dem Bremssignal die der ersten Achse zugeordnete Bremse ausgelöst. In anderen Worten wird die erste Achse gebremst, insbesondere maßgeblich unter Umwandlung kinetischer Energie des Fahrzeugs in Wärmeenergie.

In einem Schritt e) wird dem Bremsregelungssystem ein Blockiersignal bereitgestellt, das repräsentativ ist für eine aktive Antiblockierregelung der der ersten Achse zugeordneten Bremse. Beispielsweise ermittelt die Antiblockierregelung ein Blockieren eines (oder mehrerer) Räder und regelt unabhängig von dem Bremsregelungssystem selbstständig Bremskraft bzw. -druck der entsprechenden Bremse. In diesem Zusammenhang wird dem Bremsregelungssystem beispielsweise lediglich ein Indikator bereitgestellt, welcher anzeigt, ob die Antiblockierregelung aktiv ist oder nicht.

In einem Schritt f) wird abhängig von dem Blockiersignal und unter Beibehaltung der Aktivierung der der zweiten Achse zugeordneten Rekuperationsbremse, die der ersten Achse zugeordnete Rekuperationsbremse deaktiviert. In anderen Worten wird bei aktiver Antiblockierregelung der der ersten Achse zugeordneten Bremse die zweite Achse weiterhin unter Rückspeisung von Energie in einen Energiespeicher des Fahrzeugs gebremst.

In vorteilhafter Weise ermöglicht dies insbesondere bei niedrigem Reibungskoeffizienten zum Untergrund (sog. Niedrigreibwert, engl. "low µ", bspw. bei Werten µ < 0,5) eine erhöhte Verzögerung des Fahrzeugs unter Beibehaltung der der Regelbarkeit der Antiblockierregelung.

In einer vorteilhaften Ausgestaltung gemäß dem ersten Aspekt werden in dem Schritt b) die der ersten und zweiten Achse zugeordneten Rekuperationsbremsen jeweils in einen Schubrekuperationszustand versetzt.

Ein zur Rekuperation an der (entsprechenden) Rekuperationsbremse im Schubrekuperationszustand eingestelltes Rekuperationsmoment wirkt der Bewegung des Kraftfahrzeugs entgegen und verzögert dieses.

In einer weiteren vorteilhaften Ausgestaltung gemäß dem ersten Aspekt werden in dem Schritt d) die der ersten und zweiten Achse zugeordneten Rekuperationsbremsen jeweils in einen Bremsrekuperationszustand versetzt.

Ein zur Rekuperation an der (entsprechenden) Rekuperationsbremse im Bremsrekuperationszustand eingestelltes Rekuperationsmoment wirkt der Bewegung des Kraftfahrzeugs entgegen und verzögert dieses.

Das Rekuperationsmoment einer Rekuperationsbremse im Bremsrekuperationszustand ist bevorzugt höher, insbesondere vielfach höher als das Rekuperationsmoment der entsprechenden Rekuperationsbremse im Schubrekuperationszustand.

In einer weiteren vorteilhaften Ausgestaltung gemäß dem ersten Aspekt ist der zweiten Achse eine weitere Bremse mit Antiblockierregelung zugeordnet. In dem Schritt d) wird abhängig von dem Bremssignal die der zweiten Achse zugeordnete weitere Bremse ausgelöst.

In einer weiteren vorteilhaften Ausgestaltung gemäß dem ersten Aspekt wird in einem Schritt g) dem Bremsregelungssystem ein weiteres Blockiersignal bereitgestellt, das repräsentativ ist für eine aktive Antiblockierregelung der der zweiten Achse zugeordneten Bremse.

In einem Schritt h) wird abhängig von dem weiteren Blockiersignal die der zweiten Achse zugeordnete Rekuperationsbremse deaktiviert. In anderen Worten wird erst bei aktiver Antiblockierregelung der der ersten und zweiten Achse zugeordneten Bremsen auf ein Bremsen des Fahrzeugs unter Rückspeisung von Energie in einen Energiespeicher des Fahrzeugs verzichtet und das Fahrzeug nur mehr unter Umwandlung kinetischer Energie des Fahrzeugs in Wärmeenergie verzögert.

In vorteilhafter Weise kann so das volle Potenzial des vorhandenen Reibwerts, insbesondere hinsichtlich der zweiten Achse, ausgenutzt werden, was sowohl zu einer erhöhten Verzögerung des Fahrzeugs als auch einer erhöhten Rückspeisung von Energie im Vergleich zu einer Deaktivierung sämtlicher Rekuperationsbremsen bei Blockieren eines (oder mehrerer) lediglich der ersten Achse zugeordneter Räder beiträgt.

Gemäß eines zweiten Aspekts betrifft die Erfindung ein Bremsregelungssystem für ein Fahrzeug.

Das Fahrzeug weist eine erste Achse und eine in Fahrtrichtung des Fahrzeugs darauffolgende zweite Achse auf.

Der ersten Achse ist eine Rekuperationsbremse zur Verzögerung des Fahrzeugs unter Rückspeisung von Energie in einen Energiespeicher des Fahrzeugs zugeordnet. Der zweiten Achse ist ebenfalls eine Rekuperationsbremse zur Verzögerung des Fahrzeugs unter Rückspeisung von Energie in einen Energiespeicher des Fahrzeugs zugeordnet.

Darüber hinaus ist der ersten Achse eine Bremse mit Antiblockierregelung zugeordnet.

Das Bremsregelungssystem ist eingerichtet, das Verfahren gemäß des ersten Aspekts auszuführen.

Gemäß eines dritten Aspekts betrifft die Erfindung ein Computerprogramm zum Betreiben eines Bremsregelungssystems.

Das Computerprogramm umfasst Befehle, die bei der Ausführung des Computerprogramms durch einen Computer diesen veranlassen, das Verfahren gemäß des ersten Aspekts auszuführen.

Gemäß eines vierten Aspekts betrifft die Erfindung ein computerlesbares Speichermedium.

Auf dem computerlesbaren Speichermedium ist das Computerprogramm gemäß des dritten Aspekts gespeichert.

Ausführungsbeispiele der Erfindung sind im Folgenden anhand der schematischen Zeichnungen näher erläutert.

Es zeigen:
- Figuren 1 bis 5: beispielhafte Messgrößen beim Betrieb eines Fahrzeugs;
- Figur 6: beispielhafter Vergleich von Zustandsverläufen beim Betrieb eines Fahrzeugs;
- Figur 7: beispielhafte Ein- und Ausgangsgrößen eines Bremsregelungssystems für ein Fahrzeug; und
- Figur 8: ein beispielhaftes Ablaufdiagramm eines Verfahrens zum Betreiben eines Bremsregelungssystems für ein Fahrzeug.

Elemente gleicher Konstruktion oder Funktion sind figurenübergreifend mit den gleichen Bezugszeichen versehen.

Auf Niedrigreibwert verzögert ein Kraftfahrzeug im teilgebremsten Bereich, d.h. im Falle, dass die Bremswirkung ausschließlich durch das mechanische bzw. hydraulische Bremssystem erzeugt wird, bei aktiver Antiblockierregelung des Bremssystems einer Achse (zwei Räder) schlechter als bei Rekuperation an allen vier Rädern. Im Folgenden wird eine Verbesserung der Gesamtverzögerung von elektrifizierten Fahrzeugen im teilgebremsten Bereich und nur einer Achse (bevorzugt Vorderachse) in ABS Regelung durch gleichzeitige Rekuperation an der nicht ABS gebremsten (Hinter)Achse vorgeschlagen, und damit eine Anhebung der Gesamtfahrzeugverzögerung auf das identische Niveau, wie während der Rekuperation an allen vier Rädern.

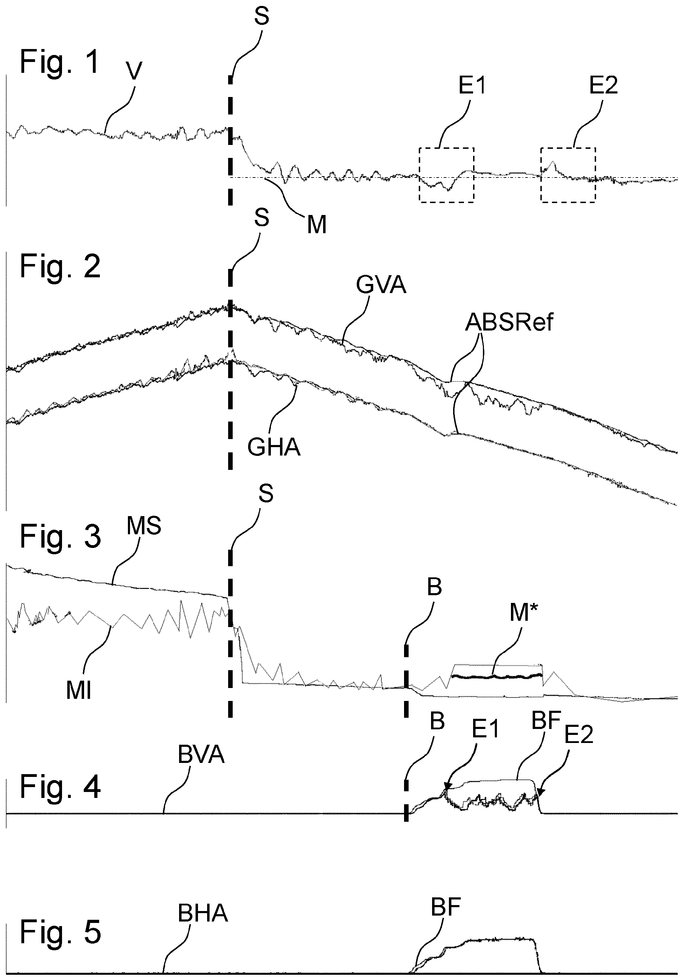

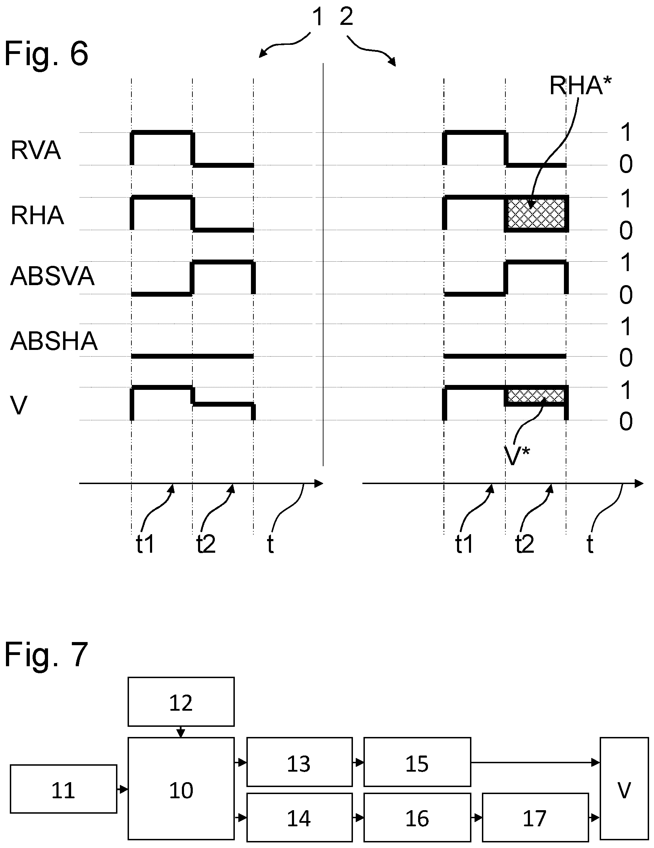

Wenn die Vorderachse, speziell auf niedrigem Reibwert, in der ABS Regelung ist und die Hinterachse nicht, kann es zu einer Unterbremsung kommen, da die Hinterachse nicht ihr volles Bremspotenzial (vgl. M* in Fig. 3 sowie RHA* und V* in Fig. 6 rechts) ausnutzt - das ABS versucht eine maximale Verzögerung auf dem gegebenem Reibwert zu ermöglichen.

Die Räder der unterbremsten Achse laufen dann mit der ABS Referenzgeschwindigkeit ABSRef gleich (vgl. GHA in Fig. 2 unten), während an der Vorderachse ein (für eine ABS Reglung übliches) Schlupfmuster zu erkennen ist (vgl. GVA in Fig. 2 oben).

Der an der Hinterachse anliegende Druck BHA entspricht dem Fahrervordruck BF auf der Bremse (vgl. Fig. 5). Bei erkannter ABS Bremsung, egal an welchem Rad, kann die Rekuperation abgeworfen/ausgerampt werden und das ABS übernimmt den Auftrag das Fahrzeug zu verzögern. Wenn, wie beschrieben, nur eine Achse in der ABS Regelung ist, dann kann nicht das volle Potenzial des vorhandenen Reibwerts ausgenutzt werden vgl. M* in Fig. 3 sowie RHA* und V* in Fig. 6 rechts).

Im vorliegend vorgeschlagenen Bremsregelungssystem und Verfahren zum Betreiben eines solchen wird die Rekuperation an der nicht ABS gebremsten so lange aufrecht erhalten, bis diese ebenfalls in der ABS Regelung ist. Somit kann beigetragen werden, Einbrüche in der Verzögerung (vgl. E1 in Fig. 1) zu vermeiden und dementsprechend den Übergang von Rekuperation ins ABS kaum auflösen. In vorteilhafter Weise wird eine maximale Verzögerung ohne Verzögerungsschwankungen erreicht bzw. dazu beigetragen.

Bei dem Übergang aus der Rekuperationsbremsung, **d.h.** Fahrzeug verzögert rein über Rekuperation in die teilgebremste Fahrerbremsung, kann es auf low µ, also auf Niedrigreibwert passieren, dass die Vorderachse in die ABS Regelung läuft, die Hinterachse aber **z.B.** aufgrund der höheren Achslast hinten wie diese bei Elektro- oder Hybridfahrzeugen ("Batttery electric vehicle", BEV oder Plug-in hybrid electric vehicle", PHEV) üblich ist, und des noch zu geringen Fahrervordrucks BF auf der Bremse nicht in die ABS Regelung kommt (vgl. Fig. 5), da die dafür nötigen Schwellen nicht erfüllt sind. Dies führt dazu, dass die Fahrzeugverzögerung spürbar abnimmt (vgl. E1 in Fig. 1), da die Rekuperation bei erkannter ABS Bremsung zurückgenommen wird. Um dies zu verhindern müsste eine Rekuperationsfunktion ("Aktornahe Radschlupfbegrenzung", ARB) an der nicht ABS gebremsten Achse die Rekuperation solange aufrecht erhalten, bis die Achse ebenfalls in die ABS Regelung geführt wird. Der Übergang aus der Rekuperation und der Fahrerbremsung ins ABS ist bevorzugt gerampt applizierbar, um Verzögerungsänderungen so komfortabel (Verschleifen) wie nur möglich zu gestalten. Exemplarisch ist die Situation ohne Einsatz des erfindungsgemäßen Bremsregelungssystems bzw. Verfahren zum Betreiben dessen anhand einer Messung (vgl. Fig. 1 bis 5) beschrieben.

Anhand der Fig. 1 ist ein gemessener Verlauf der (Gesamt-)Verzögerung V des Fahrzeugs dargestellt. Die senkrechte gestrichelte Linie deutet den Startpunkt S der Rekuperation an, nach dem die Verzögerung V weitestgehend auf einen Mittelwert M (horizontale Strich-Punkt-Linie, während Rekuperation hier ca. - 0,2 g) reduziert wird. Gestrichelt umrandet ist dabei jeweils ein Bereich E1, E2, bei dem die ABS Regelung eintritt und die Verzögerung entsprechend einbricht (links, E1) sowie bei dem die ABS Regelung austritt und die Verzögerung entsprechend steigt (rechts, E2).

Anhand der Fig. 2 ist ein gemessener Verlauf der Radgeschwindigkeiten des Fahrzeugs dargestellt. Oben ist jeweils die Geschwindigkeit GVA des linken und rechten Vorderrads sowie eine ABS Referenzgeschwindigkeit ABSRef gezeigt, unten ist jeweils die Geschwindigkeit GHA des linken und rechten Hinterrads sowie eine ABS Referenzgeschwindigkeit ABSRef gezeigt. Während der Rekuperation (rechts des Startpunkts S der Rekuperation) ist dem Verlauf der Geschwindigkeit GVA, GHA ein Schlupf sowohl an der Vorder- als auch an der Hinterachse zu entnehmen, nach Eintritt in die ABS Regelung (vgl. E1 in Fig. 1 und Fig. 4) lediglich weiterhin an der Vorderachse, während der Verlauf der Geschwindigkeit GHA der Hinterachse an der ABS Referenzgeschwindigkeit ABSRef läuft.

Anhand der Fig. 3 ist ein gemessener Verlauf des Ist-Bremsmoments MI der elektrischen Maschine sowie ein Soll-Bremsmoment MS dargestellt. Die zweite senkrechte gestrichelte Linie deutet einen Startpunkt B der Fahrerbremsung an. Nach Eintritt in die ABS Regelung (vgl. E1 in Fig. 1 und Fig. 4) ist eine deutliche Abweichung des Soll- und Ist-Bremsmoments MS, MI zu erkennen. Fett dargestellt ist weiterhin ein durch Rekuperation gemäß dem vorgeschlagenen Bremsregelungssystem bzw. Verfahren zum Betreiben dessen mögliches Verbesserungspotential M* gegenüber dem gemessenen Ist-Bremsmoment MI.

Anhand der Fig. 4 und 5 ist ein gemessener Verlauf des Bremsdrucks dargestellt. In Fig. 4 ist jeweils der Bremsdruck BVA des linken und rechten Vorderrads sowie ein Fahrervordruck BF gezeigt, in Fig. 5 ist jeweils der Bremsdruck BHA des linken und rechten Hinterrads sowie der Fahrervordruck BF gezeigt.

Abweichend von dem vorgeschlagenen Bremsregelungssystem bzw. Verfahren zum Betreiben dessen wird bei Eintritt E1 in die ABS Regelung an der Vorderachse die Rekuperation gänzlich abgeworfen.

An der Hinterachse erfolgt keine ABS Regelung, wie in Fig. 5 zu sehen entspricht der Bremsdruck BHA am Rad dem Fahrervordruck BF.

Anhand der Fig. 6 ist ein beispielhafter Vergleich von Zustandsverläufen beim Betrieb eines Fahrzeug über die Zeit t dargestellt, wobei links die Situation 1 mit obigen Messungen widerspiegelt, und rechts die Situation 2 gemäß dem hier vorgeschlagenen Verfahren zeigt. Die den Zustandsverläufen zugeordneten Werte 0, 1 sind lediglich beispielhaft und können etwa eine Aktivierung bzw. Deaktivierung bzw. eine Normierung indizieren.

Zunächst (t1) ist in Situation 1 und 2 jeweils die Rekuperation RVA an der Vorderachse sowie die Rekuperation RHA an der Hinterachse aktiv, während die ABS Regelung ABSVA an der Vorderachse und die ABS Regelung ABSHA an der Hinterachse inaktiv sind, so dass eine normierte Verzögerung V = 1 erreicht wird.

Darauf (t2) wird die ABS Reglung ABSVA an der Vorderachse aktiv und die Rekuperation RVA an der Vorderachse entsprechend deaktiviert, während die ABS Regelung ABSHA an der Hinterachse inaktiv bleibt. In Situation 1 wird auch die Rekuperation RHA an der Hinterachse deaktiviert wohingegen in Situation 2 die Rekuperation RHA an der Hinterachse trotz aktiver ABS Regelung ABSVA an der Vorderachse erhalten bleibt (siehe Schraffur RHA*) und so eine erhöhte Verzögerung (siehe Schraffur V*) erreicht werden.

Fig. 7 zeigt beispielhafte Ein- und Ausgangsgrößen des vorgeschlagenen Bremsregelungssystems 10.

So wird dem Bremsregelungssystem 10 beispielsweise ein erstes Signal 11 bereitgestellt, das repräsentativ ist für eine Schubrekuperation. Überdies kann dem Bremsregelungssystem 10 ein zweites Signal 12 Bereitgestellt werden, dass repräsentativ ist für einen Bremsdruck > 0.

Das Bremsregelungssystem 10 steuert beispielhaft die der Vorderachse 13 und Hinterachse 14 zugeordneten mechanischen bzw. hydraulischen Bremsen sowie Rekuperationsbremsen an. Beispielsweise erfolgt im Falle, dass die Vorderachse 13 in die ABS Regelung 15 übergeht, ein Abgleich 16 des vorgegebenen Bremsdrucks mit einem vorgegebenen Schwellenwert, bis zu dem die Hinterachse weiterhin in einem Bremsrekuperationszustand 17 gehalten wird, um so eine Verzögerung V des Fahrzeugs zu erwirken.

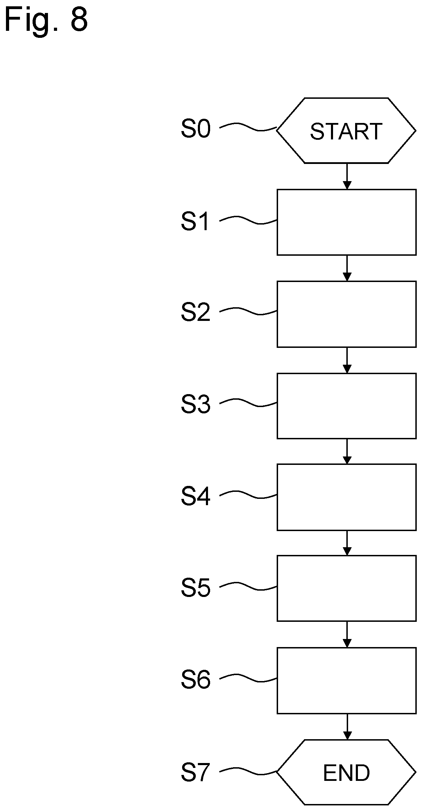

Dem Bremsregelungssystem 10 ist beispielsweise ein Daten- und Programmspeicher zugeordnet, auf dem ein Programm zur Ausführung des vorgeschlagenen Verfahrens gespeichert ist, das nachfolgend anhand des Ablaufdiagramms der Fig. 8 näher erläutert wird. Das Programm wird in einem Schritt S0 gestartet, beispielsweise werden hier Variablen initialisiert. In einem Schritt S1 wird ein Schubsignal bereitgestellt, das repräsentativ ist für einen Schubbetrieb des Fahrzeugs. Daraufhin werden die der Vorder- und Hinterachse zugeordneten Rekuperationsbremsen aktiviert (Schritt S2). Die Schritte S1, S2 bilden beispielhaft die Situation ab wenn ein Fahrer das Fahrpedal verlässt und das Fahrzeug rekuperiert.

In einem Schritt S3 wird ein Bremssignal bereitgestellt, das repräsentativ ist für eine Fahrzeugbremsbetätigung. Die Rekuperationsbremsen bleiben aktiviert. In einem Schritt S4 wird abhängig von dem Bremssignal die der Vorderachse zugeordnete mechanische bzw. hydraulische Bremse aktiviert. Die Rekuperationsbremsen bleiben weiterhin aktiviert. Die Schritte S3 und S4 bilden beispielhaft die Situation ab wenn sich der Fahrer entschließt die Betriebsbremse zu betätigen, und die Rekuperation erhalten bleibt (Blending).

In einem Schritt S5 wird ein Blockiersignal bereitgestellt, das repräsentativ ist für eine aktive ABS Regelung der Vorderachse. In einem Schritt S6 wird abhängig von dem Blockiersignal bei weiterhin aktiver Rekuperationsbremse der Hinterachse, die Rekuperationsbremse der Vorderachse deaktiviert. Beispielhaft wird das Verfahren im Anschluss (Schritt S7) beendet oder neugestartet. Alternativ ist ebenfalls denkbar, ein etwaiges weiteres Blockiersignal repräsentativ für eine aktive ABS Regelung der Hinterachse abzuwarten, daraufhin auch die Rekuperationsbremse der Hinterachse zu deaktivieren und das Verfahren erst dann zu beenden. Die Schritte S5 ff. bilden beispielhaft die Situation ab wenn die Vorderachse aufgrund der Reibwertverhältnisse in die ABS Regelung geführt wird und der Fahrervordruck nicht ausreicht, um die Hinterachse in die ABS Regelung zu führen. Die Rekuperation bleibt, mit dem für eine Achse möglichen Potenzial M* (vgl. Fig. 3), an der nicht ABS gebremsten Achse stehen, während an der Vorderachse das ABS regelt und keine Rekuperation erfolgt.

Die Erfindung ist nicht durch die Beschreibung anhand der Ausführungsbeispiele auf diese beschränkt. Vielmehr sind zahlreiche Änderungen sowie Abwandlungen möglich, ohne dass dadurch der durch die Patentansprüche definierte Schutzbereich verlassen wird.

## Patentansprüche

1. Verfahren zum Betreiben eines Bremsregelungssystems für ein Fahrzeug mit einer ersten und einer in Fahrtrichtung des Fahrzeugs darauffolgenden zweiten Achse, wobei
- der ersten und zweiten Achse jeweils eine Rekuperationsbremse zur Verzögerung des Fahrzeugs unter Rückspeisung von Energie in einen Energiespeicher des Fahrzeugs zugeordnet sind, und
- der ersten Achse eine Bremse mit Antiblockierregelung zugeordnet ist, und
bei dem Verfahren
a) dem Bremsregelungssytem ein Schubsignal bereitgestellt wird (S1), das repräsentativ ist für einen Schubbetrieb des Fahrzeugs;
b) abhängig von dem Schubsignal die der ersten und zweiten Achse zugeordneten Rekuperationsbremsen aktiviert werden (S2);
c) dem Bremsregelungssystem ein Bremssignal bereitgestellt wird (S3), das repräsentativ ist für eine Fahrzeugbremsbetätigung;
d) abhängig von dem Bremssignal die der ersten Achse zugeordnete Bremse ausgelöst wird (S4);
e) dem Bremsregelungssystem ein Blockiersignal bereitgestellt wird (S5), das repräsentativ ist für eine aktive Antiblockierregelung der der ersten Achse zugeordneten Bremse; und
f) abhängig von dem Blockiersignal, unter Beibehaltung der Aktivierung der der zweiten Achse zugeordneten Rekuperationsbremse, die der ersten Achse zugeordnete Rekuperationsbremse deaktiviert wird (S6).

2. Verfahren nach Anspruch **1,** wobei in dem Schritt b) die der ersten und zweiten Achse zugeordneten Rekuperationsbremsen jeweils in einen Schubrekuperationszustand versetzt werden (S2).

3. Verfahren nach Anspruch **1,** wobei in dem Schritt d) die der ersten und zweiten Achse zugeordneten Rekuperationsbremsen jeweils in einen Bremsrekuperationszustand versetzt werden (S4).

4. Verfahren nach Anspruch **1,** wobei der zweiten Achse eine weitere Bremse mit Antiblockierregelung zugeordnet ist, und in dem Schritt d) abhängig von dem Bremssignal die der zweiten Achse zugeordnete weitere Bremse ausgelöst wird (S4).

5. Verfahren nach Anspruch **4,** bei dem ferner
g) dem Bremsregelungssystem ein weiteres Blockiersignal bereitgestellt wird, das repräsentativ ist für eine aktive Antiblockierregelung der der zweiten Achse zugeordneten Bremse, und
h) abhängig von dem weiteren Blockiersignal die der zweiten Achse zugeordnete Rekuperationsbremse deaktiviert wird.

6. Bremsregelungssystem (10) für ein Fahrzeug mit einer ersten (13) und einer in Fahrtrichtung des Fahrzeugs darauffolgenden zweiten Achse (14), wobei
- der ersten und zweiten Achse jeweils eine Rekuperationsbremse zur Verzögerung des Fahrzeugs unter Rückspeisung von Energie in einen Energiespeicher des Fahrzeugs zugeordnet sind, und
- der ersten Achse eine Bremse mit Antiblockierregelung zugeordnet ist, wobei
das Bremsregelungssystem eingerichtet ist, das Verfahren nach einem der vorstehenden Ansprüche 1 bis 5 auszuführen.

7. Computerprogramm zum Betreiben eines Bremsregelungssystems (10), umfassend Befehle, die bei der Ausführung des Computerprogramms durch einen Computer diesen veranlassen, das Verfahren nach einem der Ansprüche 1 bis 5 auszuführen.

8. Computerlesbares Speichermedium, auf dem das Computerprogramm nach Anspruch 7 gespeichert ist.

## Claims

1. Method for operating a brake control system for a vehicle with a first axle and a second axle following it in the direction of travel of the vehicle, wherein
- the first and second axles are each assigned a recuperation brake for decelerating the vehicle while feeding energy back into an energy storage of the vehicle, and
- the first axle is assigned a brake with anti-lock control, and in which method
a) a thrust signal is provided to the brake control system (S1) which is representative of a thrust operation of the vehicle;
b) depending on the thrust signal, the recuperation brakes associated with the first and second axles are activated (S2);
c) a brake signal is provided to the brake control system (S3) that is representative of a vehicle brake application;
d) depending on the brake signal, the brake associated with the first axle is triggered (S4);
e) a lockup signal is provided to the brake control system (S5) that is representative of active anti-lock control of the brake associated with the first axle; and
f) depending on the lockup signal, the recuperation brake assigned to the first axle is deactivated (S6) while maintaining the activation of the recuperation brake assigned to the second axle.

2. Method according to claim 1, wherein in step b) the recuperation brakes associated with the first and second axles are each set to a thrust recuperation state (S2).

3. Method according to claim 1, wherein in step d) the recuperation brakes associated with the first and second axles are each set to a brake recuperation state (S4).

4. Method according to claim 1, wherein a further brake with anti-lock control is assigned to the second axle, and in step d) the further brake assigned to the second axle is triggered (S4) depending on the brake signal.

5. Method according to claim 4, in which, in addition
g) a further lockup signal is provided to the brake control system, which is representative of active anti-lock control of the brake assigned to the second axle, and
h) depending on the further lockup signal, the recuperation brake assigned to the second axle is deactivated.

6. Brake control system (10) for a vehicle with a first axle (13) and a second axle (14) following it in the direction of travel of the vehicle, wherein
- the first and second axles are each assigned a recuperation brake for decelerating the vehicle while feeding energy back into an energy storage of the vehicle, and
- the first axle is assigned a brake with anti-lock control, wherein
the brake control system is designed to execute the method according to one of the preceding claims 1 to 5.

7. Computer program for operating a brake control system (10), comprising instructions which, when the computer program is executed by a computer, cause the computer to perform the method according to one of claims 1 to 5.

8. Computer-readable storage medium on which the computer program according to claim 7 is stored.

## Revendications

1. Procédé pour faire fonctionner un système de régulation de freinage pour un véhicule comportant un premier essieu et un deuxième essieu situé derrière celui-ci dans le sens de marche du véhicule, sachant que
- un frein à récupération est associé au premier et au deuxième essieu pour ralentir le véhicule tout en réinjectant de l'énergie dans un accumulateur d'énergie du véhicule, et
- un frein avec régulation antiblocage est associé au premier essieu, et
sachant que
a) un signal de poussée représentatif d'un mode de poussée du véhicule est fourni (S1) au système de régulation de freinage ;
b) en fonction du signal de poussée, les freins à récupération associés aux premier et deuxième essieux sont activés (S2) ;
c) un signal de freinage représentatif d'un actionnement des freins du véhicule est fourni (S3) au système de régulation de freinage ;
d) en fonction du signal de freinage, le frein associé au premier essieu est déclenché (S4) ;
e) un signal de blocage représentatif d'une régulation antiblocage active du frein associé au premier essieu est fourni au système de régulation de freinage (S5) ; et
f) en fonction du signal de blocage, tout en maintenant l'activation du frein à récupération associé au deuxième essieu, le frein à récupération associé au premier essieu est désactivé (S6).

2. Procédé selon la revendication 1, sachant que, à l'étape b), les freins à récupération associés aux premier et deuxième essieux sont respectivement mis dans un état de récupération de poussée (S2).

3. Procédé selon la revendication 1, sachant que, à l'étape d), les freins à récupération associés aux premier et deuxième essieux sont respectivement mis dans un état de freinage avec récupération (S4).

4. Procédé selon la revendication 1, sachant qu'un autre frein avec régulation antiblocage est associé au deuxième essieu, et sachant que, à l'étape d), l'autre frein associé au deuxième essieu est déclenché en fonction du signal de freinage (S4).

5. Procédé selon la revendication 4, sachant qu'en outre
g) un autre signal de blocage représentatif d'une régulation antiblocage active du frein associé au deuxième essieu est fourni au système de régulation de freinage, et
h) en fonction de l'autre signal de blocage, le frein à récupération associé au deuxième essieu est désactivé.

6. Système de régulation de freinage (10) pour un véhicule comportant un premier essieu et un deuxième essieu situé derrière celui-ci dans le sens de marche du véhicule, sachant que
- un frein à récupération est associé au premier et au deuxième essieu pour ralentir le véhicule tout en réinjectant de l'énergie dans un accumulateur d'énergie du véhicule, et
- un frein avec régulation antiblocage est associé au premier essieu, sachant que
le système de régulation de freinage est conçu pour exécuter le procédé selon l'une des revendications précédentes 1 à 5.

7. Programme informatique pour faire fonctionner un système de régulation de freinage (10), comprenant des instructions qui, lors de l'exécution du programme informatique par un ordinateur, amènent celui-ci à exécuter le procédé selon l'une des revendications 1 à 5.

8. Support d'enregistrement lisible par ordinateur, sur lequel est stocké le programme informatique selon la revendication 7.
